# EUROPÄISCHE PATENTSCHRIFT

(11) **EP 2 039 235 B1**
(45) Veröffentlichungstag und Bekanntmachung des Hinweises auf die Patenterteilung: **28.04.2010**
(21) Anmeldenummer: 08016041.9
(22) Anmeldetag: 11.09.2008
(51) Int. Cl.: A01D 43/077

(54) **Rasenmäher**
Lawn mower
Tondeuse

(30) Priorität: 19.09.2007 DE 102007044770; 10.07.2008 DE 202008009264 U
(43) Veröffentlichungstag der Anmeldung: 25.03.2009
(73) Patentinhaber: Fichtner, Klaus, 76297 Stutensee (DE)
(72) Erfinder: Fichtner, Klaus, 76297 Stutensee (DE)
(74) Vertreter: Geitz Truckenmüller Lucht

(56) Entgegenhaltungen:
- EP-A- 0 457 433
- EP-A- 0 579 386
- EP-A- 0 821 869
- AU-B2- 515 003

## Beschreibung

Die vorliegende Erfindung betrifft einen Rasenmäher mit einem Gehäuse, umfassend einen Sammelbehälter zum Auffangen von mittels einer rotierenden Messerscheibe geschnittenem Mähgut, einen Ansaugkanal zum Ansaugen des Mähguts in den Sammelbehälter sowie einen Absaugkanal zum Ableiten der angesaugten Luft aus dem Sammelbehälter, wobei dem Absaugkanal eine konzentrisch zu der Messerscheibe gemeinsam mit dieser gelagerte Verdichterscheibe zur Erzeugung eines Unterdrucks in dem Sammelbehälter zugeordnet ist, wobei die Verdichterscheibe gemeinsam mit der Messerscheibe von einem Mähraum umgeben ist, in welchen sowohl der Ansaugkanal als auch der Absaugkanal münden.

Ein solcher Rasenmäher ist insbesondere aus der europäischen Patentanmeldung EP 0 579 386 A1 bekannt. Ein derartiger Rasenmäher weist eine Verdichterscheibe und ein auf der gleichen Achse gelagertes Schneidwerkzeug auf, wobei das geschnittene Mähgut aufgrund eines Luftstroms von dem Schneidwerkzeug aus direkt in einen Sammelbehälter verbracht wird.

Ein weiterer ähnliche Rasenmäher ist aus der Patentschrift DE 198 50 260 B2 vorbekannt. Dort wird gelehrt, dass einem Rasenmäher ein Sammelbehälter zugeordnet ist, welcher in einen Luftkreislauf integriert ist. Hierzu wird vorgeschlagen, das Mähgut in an sich herkömmliche weise mithilfe eines Mähbalkens von der Rasenfläche abzutrennen und das abgetrennte Mähgut mithilfe eines Luftstroms anzusaugen und schließlich in einen Sammelbehälter zu verbringen. Hierzu ist erfindungsgemäß auf einem an sich herkömmlichen Rasenmäher ein zusätzliche Gebläse anzubringen, welches einen Unterdruck in dem Sammelbehälter erzeugt. Aufgrund dieses Unterdrucks wird über einen Ansaugkanal das abgetrennte Mähgut aus dem Mähraum, also dem Bereich an der Unterseite des Rasenmähers, welcher momentan mit dem Mähbalken bearbeitet wird, abgesaugt. Abluftseitig wird die in den Sammelbehälter eingebrachte Luft nach Abgabe des Mähguts über einen Abluftstutzen wieder in den Mähraum eingebracht, so dass der Luftkreislauf hiermit geschlossen und die Luftzirkulation zusätzlich unterstützt ist.

Eine weitere Verbesserung der Luftzirkulation wird gemäß der Lehre der Übersetzung der Europäischen Patentschrift Nr. DE 697 09 999 T2 erzielt, indem der Luftstrom durch einen zweiten Luftstrom derart ergänzt wird, dass eine Ablenkung des verwirbelten Mähguts nach dem Abschneiden zum Einbringen in den Sammelbehälter begünstigt wird.

Diese genannten, besonders vorteilhaften Weiterentwicklungen gehen ursprünglich zurück auf den herkömmlichen Rasenmäher, bei welchem der Mähbalken mit einer hohen Kraft betätigt wurde, welche erforderlich gewesen ist, um aufgrund der Rotation des Mähbalkens selbst das Gras nach hinten in den Fangkorb hineinzuschleudern. Eine solche Anordnung hat jedoch den Nachteil, dass der Fangkorb notwendigerweise in einer denkbaren Schleuderrichtung des Mähguts angeordnet sein muss; üblicherweise wird dies wohl die dem Benutzer zugewandte Seite des Rasenmähers sein. Dies führt jedoch zu einer eher sperrigen Anordnung des Fangkorbs, welcher dem Benutzer eines solchen Rasenmähers im Bereich der Füße häufig im Weg ist. Nachdem die oben genannten Weiterentwicklungen nunmehr ein Gebläse vorsehen, welches das Mähgut anderweitig abtransportieren kann, ist somit ein Sammelbehälter möglich, der nicht im Bereich der Füße des Benutzers liegt und somit auch deutlich weniger hinderlich ist. Mit Vorteil wird insoweit der Sammelbehälter oberhalb des Mähbalkens angeordnet.

Nachdem der Mähbalken nunmehr nicht mehr dazu benutzt werden muss, neben dem Schneiden des Mähgut dieses auch gleichzeitig nach hinten in den Fangkorb zu schleudern, kann für den Antrieb des Mähbalkens eine geringere Energie eingesetzt werden, welche für den bloßen Schnitt des Mähguts ohne Weiteres ausreichend ist. Allerdings wird die auf diese Art und Weise eingesparte Energie in den bekannten Ausführungsformen an anderer Stelle wieder benötigt, nämlich zum Betrieb des Gebläses, welches in dem Sammelbehälter einen Unterdruck erzeugen muss.

Vor diesem Hintergrund liegt der vorliegenden Erfindung die Aufgabe zu Grunde, einen Rasenmäher zu schaffen, der die Nachteile des Standes der Technik behebt und gegenüber diesem energiesparender arbeitet, wobei zugleich eine hohe Effizienz erzielt und der Komfort für den Benutzer erhöht wird.

Dies gelingt durch einen Rasenmäher gemäß den Merkmalen des Hauptanspruchs. Weitere sinnvolle Ausgestaltungen der Erfindung können den Unteransprüchen entnommen werden.

Wie bereits erwähnt, ist es bekannt, das Mähgut über einen Luftkreislauf abzutransportieren, in welchem ein Sammelbehälter vorgesehen ist. Mit Vorteil ist erfindungsgemäß dem Absaugkanal, welcher also in Zirkulationsrichtung auf den Sammelbehälter folgt, eine Verdichterscheibe zugeordnet, welche im Sammelbehälter einen Unterdruck derart erzeugt, dass die Luft über einen Ansaugkanal gemeinsam mit dem Mähgut in den Sammelbehälter eingetragen wird. Die genannte Verdichterscheibe ist dabei konzentrisch zu einer das Mähgut schneidenden Messerscheibe angeordnet, so dass die rotierenden Einrichtungen Verdichterscheibe und Messerscheibe auf der gleichen Welle rotieren. Dies ermöglicht es, den Rasenmäher in einer überaus kompakten Bauform zu realisieren, nachdem ein von der Mäheinrichtung separates Gebläse hierdurch vermieden ist. Aufgrund der kompakteren Bauform des Gebläses bzw. der Mäheinheit kann im Gegenzug entweder die Gesamtgröße des Rasenmähers verkleinert oder aber die Größe des Sammelbehälters vergrößert werden, ohne dem Benutzer zumuten zu müssen, einen größeren Rasenmäher über die Rasenfläche zu bewegen.

Zudem legt diese Art der Lagerung der Verdichterscheibe zusammen mit der Messerscheibe auf einer gemeinsamen Welle den Grundstein für die Möglichkeit, die beiden Elemente über einen gemeinsamen Antrieb anzutreiben, was im Ergebnis zu einer Energieeinsparung dahingehend führt, dass auf ein zweites, separates Aggregat zum Antrieb des Gebläses verzichtet werden kann. Neben dem Vorteil der deutlichen Energieeinsparung bringt dies ferner auch mit sich, dass der Rasenmäher auf einem deutlich niedrigeren Geräuschniveau betrieben werden kann.

Es ist mithin nicht notwendig, dass die gemeinsam gelagerte Verdichterscheibe mit der gleichen Drehzahl betrieben wird, wie die Messerscheibe. Zu diesem Zweck können mehrere konzentrische Wellen eingesetzt werden, wobei zwischen dem Antrieb und der Verdichterscheibe oder auch zwischen dem Antrieb und der Messerscheibe - gegebenenfalls auch beides - eine Übersetzung angeordnet ist. Auf diese Weise kann der benötigte Luftstrom der Rotationsfrequenz der Messerscheibe so angepasst werden, dass ein idealer Abtransport des Mähguts in den Sammelbehälter erfolgt.

Konstruktiv handelt es sich bei der Verdichterscheibe um ein Lüfterrad, bei welchem auf einer flächigen Scheibe eine Vielzahl von Lamellen angeordnet ist, so dass aufgrund der Drehung der Verdichterscheibe zuluftseitig im Bereich oberhalb der Verdichterscheibe ein Unterdruck, und abluftseitig im Bereich radial um die Verdichterscheibe herum ein Überdruck gebildet wird. Durch die, strudelförmig auf der Verdichterscheibe angeordneten, Lamellen wird folglich die Luft oberhalb der Verdichterscheibe angesaugt und radial ausgeblasen.

Im Bereich oberhalb der Verdichterscheibe mündet der Absaugkanal in den Mähraum, durch welchen aufgrund des erzeugten Unterdrucks der Sammelbehälter evakuiert wird, was wiederum durch den über den Ansaugkanal einströmenden Luftstrom, der auch das Mähgut in den Sammelbehälter einträgt, kompensiert wird. So entsteht über der Verdichterscheibe ein Luftstrom nach unten, der durch die Verdichterscheibe radial abgelenkt wird, und gleichzeitig ein Luftstrom nach oben in den Ansaugkanal. Um einen gleichmäßigen Luftstrom zu ermöglichen und Verwirbelungen zu vermeiden, kann die Verdichterscheibe in ihrem Randbereich tellerförmig aufgebogen sein. Dann wird die radial abgeführte Luft mit einem Bewegungsanteil nach oben ausgestoßen und somit im Bereich des Ansaugkanals direkt in diesen eingebracht.

Im Bereich des Absaugkanals und auch ansonsten überall außerhalb des Bereichs des Ansaugkanals ist eine derartige Luftführung nicht erwünscht, so dass in diesen Bereichen ein Ablenkblech vorzusehen ist, das den aufgebogenen Randbereich der Verdichterscheibe bogenförmig umgreift, wobei zwischen der Verdichterscheibe und dem Ablenkblech ein ausreichender Luftspalt verbleibt, durch den die Luft hindurch strömen kann. Hierdurch ist etwa auch vermieden, dass im Bodenbereich aufgewirbelte Steine oder ähnliches vom Luftstrom erfasst und fortgeschleudert werden. Das Ablenkblech kann im Wortsinn aus Blech, jedoch vorzugsweise aus Kunststoff hergestellt und bedarfsweise einstückig mit dem Gehäuse gebildet sein.

Die Erfindung kann ferner dadurch sinnvoll weitergebildet werden, dass das Gehäuse auf drei Rädern aufgeständert ist, von denen eines als Lenkrad ausgebildet ist. Dieses Lenkrad ist mit besonderem Vorteil konzentrisch zur Messerscheibe angeordnet und unabhängig von der Lagerung derselben aufgehängt. Zunächst einmal hat die konzentrische Lagerung des Lenkrads den Vorteil, dass die Messerscheibe stets um das Lenkrad herum rotiert, so dass das Lenkrad beim Mähvorgang nicht im Wege ist. Gerade bei handelsüblichen Rasenmähern mit vier Rädern definieren die Vorderräder üblicherweise, wie dicht der Rasenmäher an eine zu mähende Rasenkante herangeführt werden kann. Sobald die Vorderräder anstoßen, kann der dort üblicherweise verwendete Mähbalken nicht mehr dichter an die besagte Kante herangeführt werden, so dass die Vorderräder den Zugriffsbereich des Rasenmähers einschränken. In der genannten Ausführungsform befindet sich das einzige Vorderrad in der Mitte der Messerscheibe, so dass die Messerscheibe selbst weitgehend selbst die Vorderkante des Rasenmähers bildet.

Dabei ist das Lenkrad unabhängig von der Lagerung der Messerscheibe aufgehängt, so dass etwaige Schläge auf das Vorderrad, etwa beim Fahren über einen Stein oder eine Kante hinauf, nicht auf die Messerscheibe und deren Lagerung übertragen werden, so dass diese auch bei einem etwaigen Schlag auf das Vorderrad weiterhin sauber drehen kann. Auch der Einsatz des vorstehend beschriebenen Lenkrads kann unabhängig von der eigentlichen Erfindung eingesetzt werden, also auch insbesondere bei handelsüblichen Rasenmähern.

Eine Verbesserung des vorbeschriebenen zentralen Lenkrads stellt es dar, wenn die Messerscheibe eine mittige Ausnehmung für das Lenkrad aufweist und somit im Bereich ihrer Aufhängung ringförmig ausgebildet ist. Eine solche Messerscheibe führt wenigstens einen Messereinsatz, welcher je nach Bedarf zwei oder mehr Messer aufweist. Diese Messer können bei Bedarf auch einzeln ausgetauscht werden. Ebenfalls ist es möglich, ganze Messereinsätze jeweils dem Einsatzzweck anzupassen - etwa zum Mulchen oder zum Mähen - oder auch der Messerscheibe mehrere Messereinsätze gleichzeitig zuzuordnen. In diesem Fall können die Messer in verschiedenen Ebenen eingefügt werden, was insbesondere beim Mulchen zu einer kleineren Schnittgröße des Mähguts führt.

In sinnvoller Weiterbildung ist es möglich, die Schnitthöhe des erfindungsgemäßen Rasenmähers dadurch zu variieren, dass die Vorderachse, bzw. im Falle einer dreirädrigen Ausführung das Lenkrad, in Bezug auf das Gehäuse angehoben oder abgesenkt wird. Dies ist dadurch möglich, dass die Aufhängung des Lenkrades als pneumatischer, hydraulischer, mechanischer oder elektrisch angetriebener Hubzylinder ausgeführt ist, welcher - von außen betätigbar - aus- und eingerückt werden kann. Durch ein Ausrücken des Lenkrades wird also beispielsweise im Ergebnis der Rasenmäher als Ganzes weiter von der Rasenfläche angehoben, was in einer größeren Schnittlänge resultiert. Durch ein Einrücken des Lenkrades wird umgekehrt der Rasenmäher, insbesondere die Messerscheibe, näher an die Rasenfläche gebracht, was zu einem kürzeren Schnitt des Rasens führt. Allerdings führt eine Anhebung bzw. Absenkung lediglich eines Rades zu einer Schrägstellung des Rasenmähers, so dass eine schräge Schnittkante erzeugt wird. Dies ist nicht erwünscht, so dass in bevorzugter Ausführung nicht allein das Lenkrad, sondern vielmehr sämtliche Räder gleichermaßen heb- und senkbar sind. Soweit im Folgenden vom Heben und Senken des Lenkrads gesprochen wird, ist hierunter stets auch die Möglichkeit eines gleichzeitigen Hebens und Senkens der übrigen Räder zu verstehen.

Konkret ist hierzu der Hubzylinder, mit dem das Lenkrad aufgehängt ist, an einer Schwenkgabel drehbar angehängt, welche auf und abwärts schwenkbar ist. Die Schwenkgabel wird durch einen Schwenkarm betätigt, wobei zwischen Schwenkarm und Schwenkgabel eine drehbare Lagerung vorgesehen ist. So wird durch eine Abwärtsbewegung des Schwenkarms die Schwenkgabel - und mit ihr der Hubzylinder - nach oben bewegt und somit die Schnitthöhe verringert.

Eine Alternative hierzu stellt es dar, lediglich die Messerscheibe derart zu lagern, so dass der Rasenmäher als Ganzes stets in gleicher Höhe bleibt und sich lediglich die Messerscheibe auf und ab bewegt. Dies hat den Vorteil, dass eine Erhöhung der Unterkante des Rasenmähers nicht erfolgt, wodurch ein Eingriff in den Mähraum erleichtert würde. Dies birgt jedoch Gefahren, nachdem es somit auch erleichtert würde, in den Mähraum einzugreifen oder größere Gegenstände darunter zu bringen.

Mit Vorteil weist der Schwenkarm einen Zeiger auf, über den mechanisch nach außen signalisiert werden kann, wie die Schnitthöhe aktuell eingestellt ist. Nachdem die Schnitthöhe direkt in die Anhebung des Schwenkarms umgerechnet werden kann, bietet es sich an, den Zeiger hierzu fest an dem Schwenkarm anzuordnen und zu einem Sichtfenster oder über eine Öffnung nach außen zu führen.

Die Einstellung der Schnitthöhe kann im Falle der mechanischen Betätigung etwa über eine Stellschraube erfolgen, welche durch Drehung die Schwenkgabel hebt oder senkt.

Der Sammelbehälter als solcher ist durch Öffnen einer im Bereich des Sammelbehälters angebrachten Abdeckung von außen zugänglich. Dem Inneren des Sammelbehälters kann ein Mulchmodul derart zugeordnet werden, dass das in den Sammelbehälter eingetragene Mähgut direkt in das eingesetzte Mulchmodul verbracht wird, wonach es bei eingesetztem Mulchmodul insbesondere möglich ist, das eingebrachte und geschnittene Mähgut über eine Austrittsöffnung wieder direkt in die Rasenfläche einzutragen. Dabei wird der Luftstrom, welcher zum Ansaugen in den Sammelbehälter verwendet wird, wiederum eingesetzt, so dass die ohnehin vorhandene Luftzirkulation auch zum Eintragen des Mulches in die Rasenfläche dient.

Dem Mulchmodul kann dabei mit Vorteil ein Düngemitteltank, etwa für flüssige oder pulverförmige, insbesondere stickstoffhaltige, Düngemittel zugeordnet sein, wobei der Düngemitteltank über eine in den Ansaugkanal des Mulchmoduls einragende Auslassöffnung verfügt, über welche der Dünger in das gehäckselte Mähgut eintragbar ist. Hierzu wird bevorzugt eine Venturidüse eingesetzt, mithilfe derer ein Eintrag des Düngers aufgrund des ohnehin herrschenden Unterdrucks erfolgen kann.

Ebenfalls weist das Mulchmodul ein Schneidwerkzeug, etwa ein Häckselwerk oder eine Messer- oder Schneidfadenanordnung auf, welche über einen separaten Motor antreibbar ist. Der Motor verfügt ebenfalls über eine separate Spannungsversorgung, etwa einen Akku oder eine Batterie, so das das in den Sammelbehälter eingesetzte Mulchmodul unabhängig vom Rasenmäher betreibbar ist. Somit wird die Betriebsdauer des Rasenmähers vom Einsatz des Mulchmoduls nicht beeinflusst.

In den Sammelbehälter kann zudem oder alternativ ein Fangbehältnis eingesetzt werden, welches etwa als Fangkorb oder als Fangsack ausgebildet ist. Insbesondere ist es sinnvoll, einen Fangsack zu wählen, welcher kompostierbar ist und somit direkt als Ganzes mit dem Mähgut als Bioabfall entsorgt werden kann.

Nachdem ohnehin ein Luftstrom durch den Rasenmäher zirkuliert, erscheint es mithin sinnvoll, auch den Antrieb des Rasenmähers erforderlichenfalls durch den vorhandenen Luftstrom zu kühlen. Dabei ist es insbesondere auch möglich, einen separaten Zuluftstutzen vorzusehen, welcher abluftseitig zumindest mittelbar mit dem Sammelbehälter verbunden ist; also einen zweiten Luftstrom zu eröffnen und die beiden zunächst getrennten Luftströme spätestens im Bereich des Sammelbehälters zu vereinigen. Dabei ist der Zuluftstutzen idealerweise im Gehäuse nahe am Motor vorzusehen, so dass Frischluft am Motor vorbei hin zum Mähraum strömen kann. Durch den ohnehin im Mähraum vorhandenen Unterdruck ergibt sich folglich eine günstige Luftströmung.

Hinsichtlich des Luftstroms fällt es bei vielen bekannten Rasenmähern auf, dass sie stark mit Mähgut zusetzen, indem etwa nasses Mähgut nach dem Abschneiden von den einen Luftstrom erzeugenden Messern fortgetragen und aufgrund der Zentrifugalkraft gegen die Wandung des Mähraums getragen wird. Derartige Zusetzungen müssen dann immer wieder von Hand entfernt werden. Sie können aber auch dadurch vermieden werden, dass in dem Mähraum in einem Bereich tangential zur Messerscheibe eine Verbreiterung vorgesehen wird, so dass der kreisförmig ausgebildete Luftstrom der Messerscheibe im verbreiterten Bereich aufgrund des zusätzlich zur Verfügung stehenden Raumes sich verlangsamt und dadurch das Mähgut nicht mit Wucht gegen die Wand geschleudert wird. Durch die Verlangsamung kann das Mähgut vielmehr dem Luftstrom folgen und somit mit dem Luftstrom bis zum Ansaugkanal getragen werden. Diese Lösung ist ohne Weiteres auch auf Rasenmäher des Standes der Technik übertragbar, welche nicht die vorgenannten Merkmale der Erfindung aufweisen.

Bei dem Antrieb handelt es sich mit Vorteil um einen Elektromotor, wobei dieser wahlweise entweder aus einer Batterie, insbesondere einer aufladbaren Batterie, und/oder über ein Stromkabel, welches in diesem Fall quasi hinter dem Rasenmäher hergezogen werden müsste, versorgt werden kann.

Zur Bedienung des Rasenmähers, insbesondere zur Bedienung des Motors, der Drehzahleinstellung, aber auch zur Schnitthöheneinstellung usw. sind dem Gehäuse mit Vorteil Bedienelemente zugeordnet, welche wahlweise mit der Hand oder auch mit dem Fuß bedient werden können. Ebenfalls weist der Rasenmäher einen Führungsbügel auf, mit welchen der Rasenmäher geschoben wird.

Die vorstehend beschriebene Erfindung wird im Folgenden anhand eines Ausführungsbeispiels näher erläutert.

Es zeigen
- Figur 1: einen Rasenmäher in einer seitlichen Schnittdarstellung,
- Figur 2: den Rasenmäher gemäß Figur 1 in einer seitlichen Schnittdarstellung von der gegenüberliegenden Seite,
- Figur 3: eine modifizierte Verdichterscheibe in einer perspektivischen Darstellung,
- Figur 4: eine Abwandlung des Rasenmähers gemäß Figur 1 mit einer Verdichterscheibe ge- mäß Figur 3 in einer seitlichen Schnittdarstellung,
- Figur 5: den Rasenmäher gemäß Figur 1 in einer dreidimensionalen, perspektivischen Schnittdarstellung analog zu Figur 1,
- Figur 6: den Rasenmäher gemäß Figur 1 in einer perspektivischen Darstellung von schräg unten,
- Figur 7: den Rasenmäher gemäß Figur 1 in einer perspektivischen Darstellung von schräg oben mit Blick in den Sammelbehälter,
- Figur 8: den Rasenmäher gemäß Figur 1 in einer perspektivischen Darstellung von schräg unten, wobei die vordere Gehäusewandung entfernt ist,
- Figur 9: ein Mulchmodul zum Einsatz im Sammelbe- hälter des Rasenmähers gemäß Fig. 7, sowie
- Figur 10: eine Abwandlung des Rasenmähers gemäß Fig. 1 oder 4 in einer perspektivischen Darstellung von schräg unten.

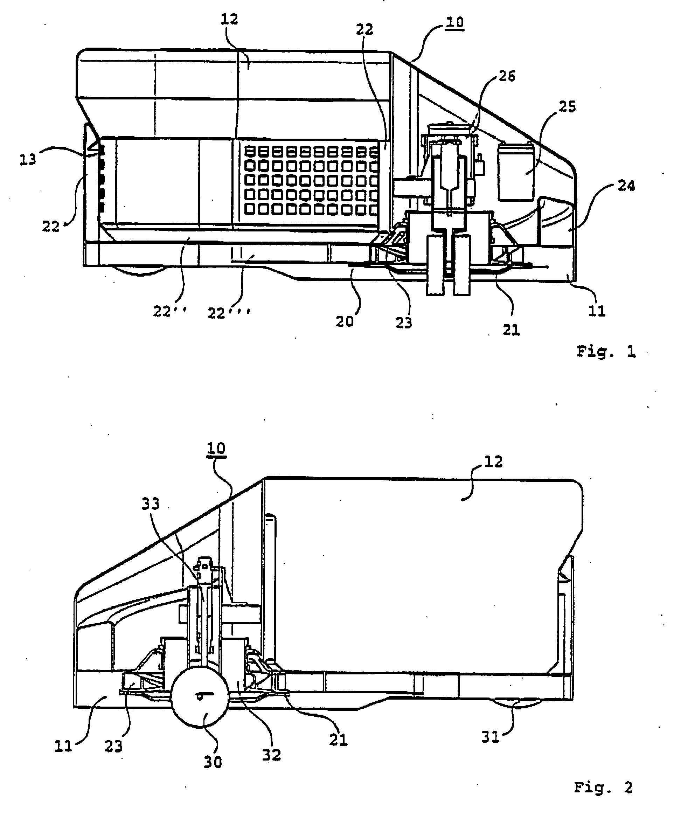

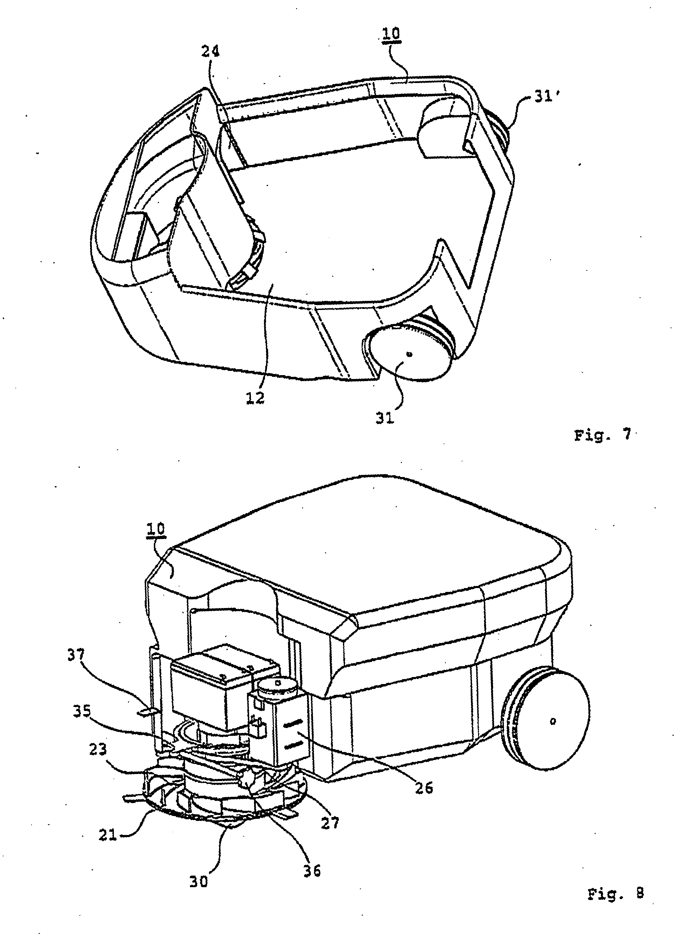

Figur 1 zeigt einen Rasenmäher mit einem Gehäuse 10, welches im wesentlichen einen Mähraum 11 sowie einen Sammelbehälter 12 umgibt. In dem Mähraum 11 ist eine Messerscheibe 21 angeordnet, welche beim Betrieb des Rasenmähers das im Bereich der Messerscheibe 21 befindliche Gras auf der von dem Rasenmäher übergriffenen Rasenfläche schneidet. Die Messerscheibe 21 ist dabei ringförmig ausgestaltet, so dass ein in der Mitte der Messerscheibe 21 diese durchragendes Laufrad 30 Platz findet. In die Messerscheibe 21 sind eine Mehrzahl von Messern 20 eingesetzt, deren Anzahl sich austauschbar durch die aktuell gewünschten Einsatzmöglichkeiten des Rasenmähers ergibt. So wird beispielsweise zum Mulchen eine größere Anzahl von Messern und gegebenenfalls auch in mehreren Ebenen unter Einsatz mehrerer Messereinsätze verwendet, wohingegen etwa beim einfachen Schneiden des Rasens eine eher geringere Zahl an Messern 20 verwendet wird. Ein gesonderter Mulcheinsatz zur Verwendung mit dem Rasenmäher ist in der Beschreibung zu Figur 7 näher erläutert.

Konzentrisch zu der Messerscheibe 21 ist auf derselben Welle wie die Messerscheibe 21 eine Verdichterscheibe 23 angeordnet, welche funktionell betrachtet in einen Absaugkanal 22 eingesetzt ist. Dieser Absaugkanal 22 führt aus dem Sammelbehälter 12 heraus einerseits direkt in den Mähraum 11, wohin die Verdichterscheibe 23 die aus dem Sammelbehälter 12 stammende Luft fördert. Alternativ tritt die Luft durch den gesamten Sammelbehälter 12 hindurch und über Belüftungsöffnungen 13, welche in den Wandungen des Sammelbehälters angebracht sind, aus und wird durch Absaugkanäle 22', 22'' und schließlich 22''' in Richtung des Gehäusebodens nach hinten abgegeben. Auf diese Weise verursacht die Verdichterscheibe 23 in dem Sammelbehälter 12 einen Unterdruck, welcher über einen Ansaugkanal 24, welcher im Bereich der Messerscheibe 21 ebenfalls in den Mähraum 11 mündet, wieder ausgeglichen wird. Dabei trägt die angesaugte Luft das von der Messerscheibe 21 abgeschnittene Mähgut in den Sammelbehälter 12 ein. Insoweit ist durch den Ansaugkanal 24, den Sammelbehälter 12 und schließlich den Absaugkanal 22 ein Luftkreislauf gebildet, in welchem die Luft durch den gesamten Rasenmäher zirkulieren kann. Dabei wird die Verdichterscheibe 23, welche auf demselben Lager sitzt wie die Messerscheibe 21, von einem gemeinsamen Antrieb 26 angetrieben, so dass ein wesentlich geringerer Energieverbrauch als bei einem separaten Gebläse anfällt. Hierdurch ist es auch möglich, den gesamten Rasenmäher lediglich mit einer wieder aufladbaren Batterie 25 zu betreiben.

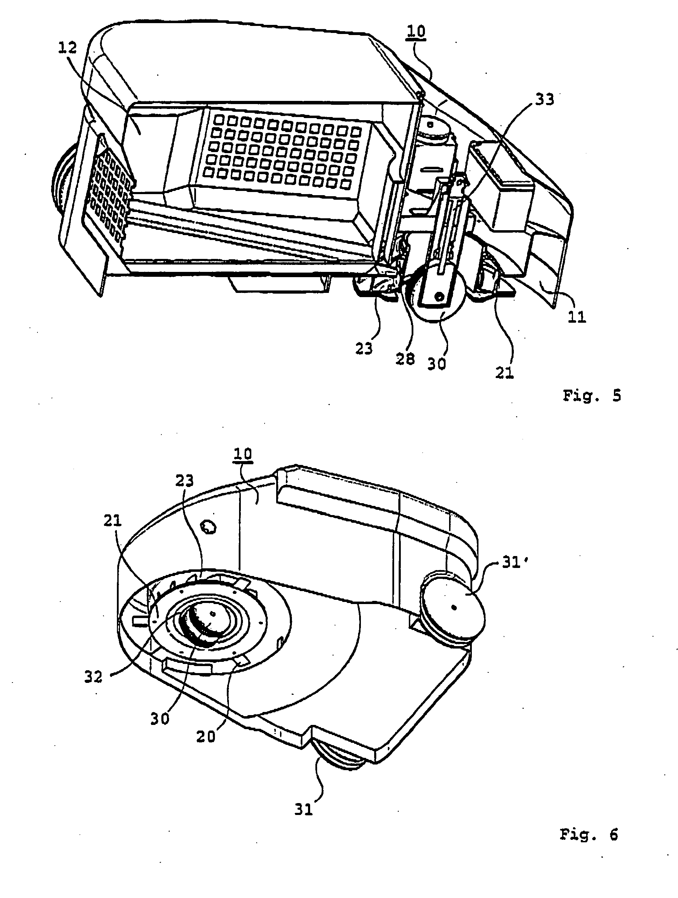

Figur 2 zeigt den Rasenmäher in einer weiteren Schnittdarstellung, wobei in der Figur 2 die andere Seite des Rasenmähers in Betracht gezogen wird. Insbesondere ist dargestellt, dass das Gehäuse 10 auf insgesamt drei Räder aufgeständert ist, nämlich auf ein Lenkrad 30, sowie zwei Hinterräder 31,31'. Aufgrund dieser Anordnung ist es möglich, dass die Messerscheibe 21 mit ihren Messern 20 im wesentlichen die Außengrenze des Gehäuses 10 darstellt, so dass der Rasenmäher weitgehend bis an etwaige Kanten herangeführt werden kann und insbesondere die Räder 30,31,31' hierbei nicht im Wege stehen. Das Lenkrad 30 ist auf einer Hubvorrichtung 33 gelagert, mittels derer das Lenkrad 30 ein- und ausgerückt werden kann, wodurch der Rasenmäher angehoben bzw. abgesenkt werden und damit die Schnitthöhe des Rasens aufgrund des mit der Absenkung bzw. Erhöhung des Rasenmähers einhergehenden Abstandes der Messerscheibe 21 von der Rasenfläche einstellbar ist. Das Lenkrad 30 ist dabei separat von der Messerscheibe 21 beziehungsweise der Verdichterscheibe 23 gelagert, so dass im Falle einer überfahrenen Kante oder bei sonstigen Schlägen auf den Radzylinder eine Beschädigung auch des Lagers von Messerscheibe 21 und Verdichterscheibe 23 vermieden ist. Gleichermaßen sind, um eine Schrägstellung des Rasenmähers bei einer Anhebung oder Absenkung des Lenkrads 30 zu vermeiden, auch die Hinterräder 31,31' gleichermaßen höhenverstellbar. Eine im Zusammenhang mit Figur 6 dargestellte Alternative sieht ebenfalls vor, lediglich die Messerscheibe 21 zu heben und zu senken, um ein Untergreifen unter das Gehäuse 10 und in den Mähraum 11 hinein aus Sicherheitsgründen zu erschweren.

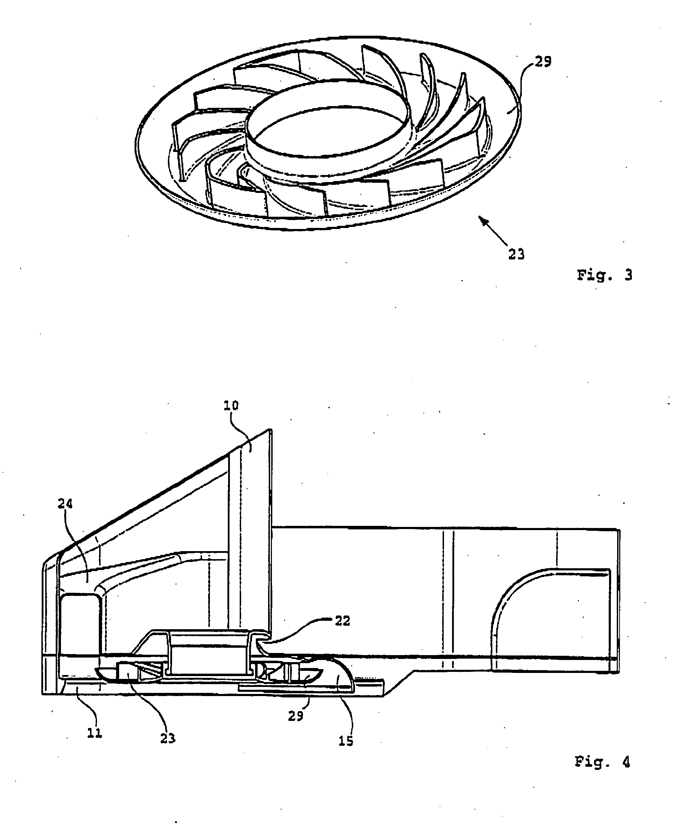

Figur 3 zeigt eine modifizierte Verdichterscheibe 23, die für eine zusätzlich verbesserte Luftführung innerhalb des Rasenmähers eingesetzt werden kann. Die Verdichterscheibe 23 weist zur Generierung eines Luftstroms oberseitig strudelförmig angeordnete Lamellen auf, welche die Luft oberhalb der Verdichterscheibe 23 ansaugen und radial abführen. Ein solcher Luftstrom würde aber quer zur Luftstromrichtung des Ansaugkanals 24 verlaufen, so dass Verwirbelungen im Mähraum 11 entstünden, welche die Ansaugkraft des Rasenmähers beeinträchtigen würden. Daher soll die Luft mit einem Anteil an Bewegung nach oben beaufschlagt werden, indem die Verdichterscheibe 23 in ihrem Randbereich 29 aufgebogen ist, so dass die Luft nicht mehr genau radial, sondern teilweise wieder nach oben abgelenkt wird.

Figur 4 zeigt einen seitlichen Querschnitt eines auf diese Verdichterscheibe 23 angepassten Rasenmähers. Im Bereich des Ansaugkanals 24 kann die Luft direkt in diesen eintreten und damit ohne Bildung von Verwirbelungen in den Luftkreislauf zurückkehren. In den hier nicht dargestellten seiltichen Bereichen und im in Richtung des Sammelbehälters gelegenen Bereich der Verdichterscheibe würde hingegen die Luft gegen Teile der Gehäusewand gedrückt werden und wiederum dort verwirbeln oder den angesaugten Luftstrom beeinträchtigen. Daher ist dem Mähraum 11 in diesen Bereichen ein Ablenkblech 15 zugeordnet, welches den aufgebogenen Randbereich 29 der Verdichterscheibe 23 bogenförmig umgreift und dabei einen Spalt für den Luftstrom freilässt. Hierdurch wird in dem fraglichen Bereich die Luft abgelenkt und letztlich nach unten abgeführt.

Figur 5 zeigt einen Schnitt durch das Gehäuse 10 des Rasenmähers, wobei ein dreidimensionaler Blick in das Innere des Rasenmähers gewährt ist. Dadurch wird nochmals verdeutlicht, dass das Verdichterlager 28 von dem Lager des Lenkrads 30 getrennt angeordnet ist, so dass eine Übertragung von mechanischen Stößen auf das Lenkrad 30 nicht auf die Messerscheibe 21 beziehungsweise die Verdichterscheibe 23 erfolgt.

Figur 6 zeigt nochmals in einer weiteren perspektivischen Darstellung von schräg unten die Anordnung der Messerscheibe 21, welche ringförmig ausgeführt ist und den Einsatz von drei Messern 20 in der hier verwendeten Messerscheibe 21. Ebenfalls gezeigt ist hier auch der von der Messerscheibe 21 frei gelassene Radkasten 32, in dem das Lenkrad 30 nach oben und unten ausweichbar gelagert ist.

Figur 7 zeigt den Rasenmäher in einer perspektivischen Darstellung von schräg oben, wobei der Sammelbehälter 12 mit dem in ihn einmündenden Ansaugkanal 24 dargestellt ist. In den Sammelbehälter 12 kann mit Vorteil ein - in Figur 7 näher dargestellter Mulcheinsatz eingesetzt werden, welcher das in den Sammelbehälter 12 eingetragene Mähgut auffängt und nochmals zerkleinert und anschließend über eine nicht näher dargestellte Austrittsöffnung wieder in die Rasenfläche einträgt. In den Sammelbehälter 12 kann ebenfalls ein Fangbehältnis eingebracht werden, etwa ein Fangsack, welcher kompostierbar ist und im Bedarfsfall zusammen mit dem Mähgut entsorgt werden kann.

Figur 8 zeigt den Rasenmäher in einer perspektivischen Darstellung von schräg unten, wobei das Gehäuse 10 im vorderen Bereich offen dargestellt ist. Hierdurch wird die Anordnung des Antriebs 26 in Bezug auf die Antriebswelle von Verdichterscheibe 23 und Messerscheibe 21 deutlich, wobei eine Übertragung 27 von dem Antrieb 26 auf die Welle zu erkennen ist. Durch die Verwendung lediglich eines Antriebes 26 kann die Betriebslautstärke des Rasenmähers deutlich verringert werden, ebenfalls ist aufgrund der Konstruktion einer deutliche Einsparung an Energie im Vergleich zur Verwendung zweier getrennter Antriebe für Gebläse und Mähbalken möglich.

Ebenfalls ist an dieser Stelle eine Alternative zur Hebung und Absenkung sämtlicher Räder zur Veränderung der Schnitthöhe dargestellt, wonach lediglich die Messerscheibe 21 mit ihrer Lagerung - unabhängig vom Lenkrad 30 - angehoben und abgesenkt werden kann. Hierzu ist eine Stellschraube 36 vorgesehen, welche den freien Schwenkarm einer Schwenkgabel 35 betätigt, so dass die Lagerung nach Lösen der Stellschraube 36 frei ist. Durch ein Heben oder Senken des Zeigers 37, der gleichzeitig die aktuell eingestellte Schnitthöhe angibt, ist diese bei gelöster Stellschraube 36 veränderlich und durch ein Anziehen der Stellschraube 36 festlegbar.

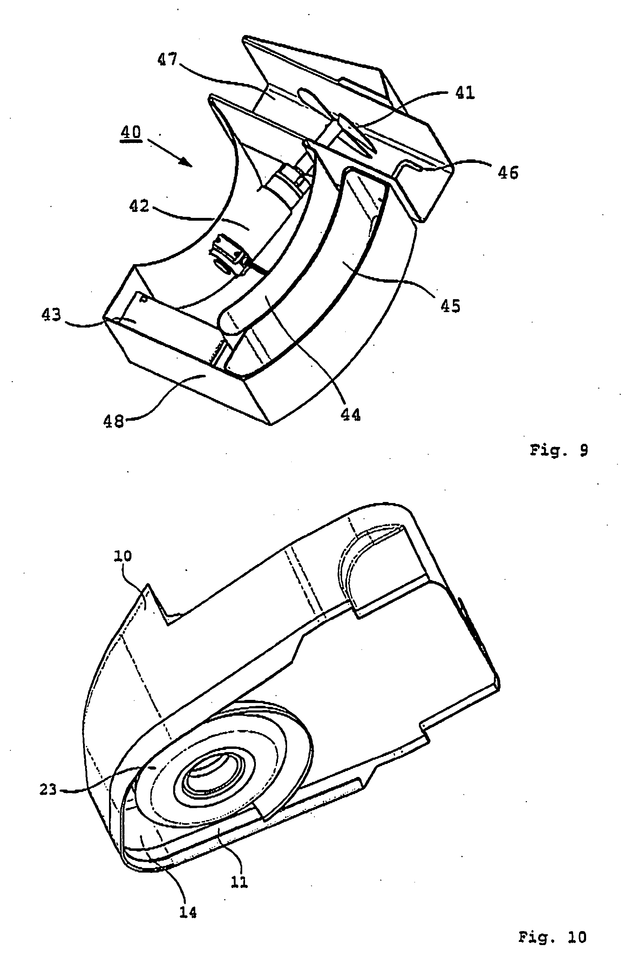

Figur 9 zeigt letztlich ein Mulchmodul 40, welches in den Sammelbehälter 12 des Rasenmähers lösbar einsetzbar ist. Sein hier offen dargestelltes Gehäuse 48 ist an die Innenform des Sammelbehälters 12 angepasst und erlaubt eine Fortsetzung des Ansaugkanals 47, wobei in diesem fortgesetzten Ansaugkanal 47 ein Schneidwerkzeug 41 angeordnet ist. Mithilfe dieses Schneidwerkzeugs 41 wird das angesaugte Mähgut weiter zerkleinert, so dass der gewünschte Mulch entsteht. In diesen Mulch wird zur Verbesserung der Kompostierungseigenschaften ein Düngemittel aus einem Düngemitteltank 45 über eine Venturidüse 46 direkt im Ansaugkanal 47 eingebracht. Aufgrund des Unterdrucks im Ansaugkanal 47 wird das Düngemittel somit selbsttätig aus dem Düngemitteltank 45 herausgesaugt und sofort untergemischt.

Der Mulcheinsatz ist unabhängig vom Rasenmäher betreibbar, indem ein separater Motor 42 für das Schneidwerkzeug 41 vorgesehen ist und dieser Motor 42 von einer separaten Batterie 43 gespeist wird. Hierdurch wird aufgrund des Betriebs des Mulchmoduls 40 die Betriebsdauer des Rasenmähers nicht beeinflusst. Ein Zuluftkanal 44 sorgt hierbei für die notwendige Luftzirkulation durch den Ansaugkanal 47.

Figur 10 zeigt eine weitere Modifikation des Gehäuses des Rasenmähers, bei welchem im Mähraum 11 eine Verbreiterung 14 derart vorgesehen ist, dass die Verbreiterung 14 sich in dem um die Verdichterscheibe 23 herum entstehenden Luftstrom befindet. Durch die Verbreiterung 14 des für den Luftstrom zur Verfügung stehenden Raumes wird der Luftstrom in diesem Bereich langsamer, da er eine größere Querschnittsfläche durchströmen kann. Das in dem Luftstrom mitgetragene Mähgut wird dadurch verlangsamt und lediglich mit deutlich verminderter Zentrifugalkraft gegen die Außenwand getragen, so dass es an dieser nicht anklebt und dadurch den Mähraum 11 nicht zusetzt, sondern das Mähgut weitgehend durch die Verlangsamung in dem Bereich der Verbreiterung 14 wieder in die Kreisbahn des Luftstroms gezogen und bestimmungsgemäß abgesaugt werden kann.

Vorstehend ist somit ein Rasenmäher beschrieben, der im Gegensatz zum Stand der Technik eine hohe Effizienz bei einem geringen Energieeinsatz ermöglicht. Ferner arbeitet der genannte Rasenmäher bei einem deutlich verringerten Geräuschpegel.

### BEZUGSZEICHENLISTE

- 10: Gehäuse
- 11: Mähraum
- 12: Sammelbehälter
- 13: Belüftungsöffnungen
- 14: Verbreiterung
- 15: Ablenkblech
- 20: Messer
- 21: Messerscheibe
- 22-22''': Absaugkanal
- 23: Verdichterscheibe
- 24: Ansaugkanal
- 25: Batterie
- 26: Antrieb
- 27: Übertragung
- 28: Verdichterlager
- 29: Aufbiegung
- 30: Lenkrad
- 31,31': Hinterrad
- 32: Radkasten
- 33: Hubvorrichtung
- 34: Radlager
- 35: Schwenkgabel
- 36: Stellschraube
- 37: Zeiger
- 40: Mulchmodul
- 41: Schneidwerkzeug
- 42: Motor
- 43: Batterie
- 44: Zuluftkanal
- 45: Düngemitteltank
- 46: Venturidüse
- 47: Ansaugkanal
- 48: Modulgehäuse

## Patentansprüche

1. Rasenmäher mit einem Gehäuse (10), umfassend einen Sammelbehälter (12) zum Auffangen von mittels einer rotierenden Messerscheibe (21) geschnittenem Mähgut, einen Ansaugkanal (24) zum Ansaugen des Mähguts in den Sammelbehälter (12) sowie einen Absaugkanal (22) zum Ableiten der angesaugten Luft aus dem Sammelbehälter (12), wobei dem Absaugkanal (22) eine konzentrisch zu der Messerscheibe (21) gemeinsam mit dieser gelagert verdichterscheibe (23) zur Erzeugung eines Unterdrucks in dem Sammelbehälter (12) zugeordnet ist, wobei die Verdichterscheibe (23) gemeinsam mit der Messerscheibe (21) von einem Mähraum umgeben ist, in welchen sowohl der Ansaugkanal (24) als auch der Absaugkanal (22) münden,
**dadurch gekennzeichnet, dass** die durch den Absaugkanal (22) strömende Luft auf die Verdichterscheibe (23) und von dieser im dem Ansaugkanal (24) zugewandten Bereich der Verdichterscheibe (23) direkt in diesen eintreten kann und zumindest im in Richtung des Sammelbehälters (12) gelegenen Bereich der Verdichterscheibe (23) aus dem Mähraum heraus geleitet wird, wobei der Ansaugkanal in bestimmungsgemäßer Fahrtrichtung vor der Verdichterscheibe (23) in den Mähraum mündet.

2. Rasenmäher gemäß Anspruch 1, **dadurch gekennzeichnet, dass** Messerscheibe (21) und Verdichterscheibe (23) von einem gemeinsamen Antrieb (26) getrieben sind und vorzugsweise zwischen Messerscheibe (21) und Antrieb (26) und/oder zwischen Verdichterscheibe (23) und Antrieb (26) eine Übersetzung vorgesehen ist.

3. Rasenmäher gemäß einem der vorhergehenden Ansprüche, **dadurch gekennzeichnet, dass** die Verdichcerscheibe (23) eine Vielzahl von Lamellen aufweist, welche jeweils von einem Randbereich der Verdichterscheibe hin zu deren Zentrum strudelförmig verlaufen.

4. Rasenmäher gemäß Anspruch 3, **dadurch gekennzeichnet, dass** die Verdiehterscheibe (23) in ihrem Randbereich in Richtung der Lamellen tellerförmig aufgebogen ist, wobei der Randbereich, und vorzugsweise auch ein mittlerer Bereich, zumindest teilweise von dem Ansaugkanal (24) übergriffen sind.

5. Rasenmäher gemäß Anspruch 4, **dadurch gekennzeichnet, dass** der Randbereich zumindest teilsweise von einem Ablenkblech (15) übergriffen ist, welches den Randbereich unter Freilassung eines Luftspalts bogenförmig umgreift.

6. Rasenmäher gemäß einem der vorhergehenden Ansprüche, **dadurch gekennzeichnet, dass** das Gehäuse (10) auf drei Rädern (30,31,31') aufgeständert ist, wobei ein zentrales Lenkrad (30) vorgesehen ist, welches konzentrisch zur Messerscheibe (21) angeordnet und unabhängig von der Lagerung der Messerscheibe (21) gelagert ist.

7. Rasenmäher gemäß Anspruch 8, **dadurch gekennzeichnet, dass** die Messerscheibe (21) wenigstens einen Messereinsatz mit einer Mehrzahl von Messern (20) sowie eine mittige Ausnehmung aufweist, durch welche das Laufrad (30) die Ebene der Messerscheibe (21) durchgreift.

8. Rasenmäher gemäß Anspruch 9, **dadurch gekennzeichnet, dass** die Messerscheibe (21) und/oder die Messereinsätze austauschbar sind, wobei verschiedene Messereinsätze, gegebenenfalls mit unterschiedlicher Messeranzahl und in mehreren Ebenen angeordnet, einsetzbar sind.

9. Rasenmäher gemäß einem der vorhergehenden Ansprüche, **dadurch gekennzeichnet, dass** die Schnitthöhe **dadurch** variierbar ist, dass zumindest die Vorderachse bzw. das Lenkrad (30), vorzugsweise jedoch alle Radaufhängungen gleichermaßen, mittels eines Hebezylinders gelagert sind, welcher über eine Schwenkgabel (35) mit dem Gehäuse (10) verbunden ist, wobei eine Höhenverstellung durch Heben oder Senken eines freien Schwenkarms der Schwenkgabel (35), vorzugsweise händisch mittels einer Stellschraube (36) oder elektrisch von einem Führungsbügel des Rasenmähers aus, erfolgen kann.

10. Rasenmäher gemäß einem der Ansprüche 1 bis 8, **dadurch gekennzeichnet, dass** die Schnitthöhe **dadurch** variierbar ist, dass die Messerscheibe (21) relativ zu dem Lenkrad mittels einer Schwenkgabel (35) höhenverschieblich gelagert ist, wobei eine Höhenverstellung durch Heben oder Senken eines freien Schwenkarms der Schwenkgabel (35), vorzugsweise händisch mittels einer Stellschraube (36) oder elektrisch von einem Führungsbügel des Rasenmähers aus, erfolgen kann.

11. Rasenmäher gemäß einem der vorhergehenden Ansprüche, **dadurch gekennzeichnet, dass** dem Sammelbehälter (12) ein Mulchmodul (40) derart fest oder entnehmbar zugeordnet ist, dass das Mähgut beim Eintritt in den Sammelbehälter (12) in das Mulchmodul (40) verbracht wird und von dort aus über eine dem Mulchmodul (40) zugeordnete und bestimmungsgemäß in Richtung der Rasenfläche weisende Austrittsöffnung wieder in die Rasenfläche eintragbar ist, wobei vorzugsweise das Mulchmodul (40) derart in den Luftkreislauf integriert ist, dass eine Mitnahme des Mulches aus dem Mulchmodul (40) mithilfe der von der Verdichterscheibe (23) angesaugten Abluft erfolg.

12. Rasenmäher gesäß einem Anspruch 11, **dadurch gekennzeichnet, dass** dem Mulchmodul (40) zumindest ein Düngemitteltank (45) zugeordnet ist, welcher über eine Auslassöffnung, vorzugsweise eine venturidüse (46), in den Mulch einbringbar ist, wobei vorzugsweise die vorhandene Saugwirkung zum Eintrag des Düngemittels nutzbar ist.

13. Rasenmäher gemäß einem der Ansprüche 11 oder 12, **dadurch gekennzeichnet, dass** dem Mulchmodul (40) wenigstens ein Schneidwerkzeug (41) zur Zerkleinerung des angesaugten Mähguts, vorzugsweise ein Häckselwerk, eine Messeranordnung oder eine Schneidfadenanordnung, zugeordnet ist, welches von einem mittels einer vom Rasenmäher unabhängigen Batterie (43) gespeisten Motor (42) angetrieben ist.

14. Rasenmäher gemäß einem der vorhergehenden Ansprüche, **dadurch gekennzeichnet, dass** eine Kühlung des Antriebs (26) mittels eines Luftstroms erfolgt, wobei sich dieser Luftstrom mit dem von der Verdichterscheibe (23) erzeugten Luftstrom vereinigt, wobei vorzugsweise dem Antrieb (26) ein separater Zuluftstutzen zugeordnet ist, welcher abluftseitig zumindest mittelbar mit dem Sammelbehälter (12) verbunden ist.

15. Rasenmäher gemäß einem der vorhergehenden Ansprüche, **dadurch gekennzeichnet, dass** das Gehäuse (10) im Bereich der Verdichterscheibe (23) einen Mähraum (11) bildet, wobei der Mähraum (11) eine Verbreiterung (14) aufweist, welche in den Ansaugkanal (24) einmündet.

## Claims

1. A lawnmower with a housing (10), comprising a grass box (12) for collecting mown material cut by means of a rotating cutting disk (21), an intake channel (24) to suck the mown material into the grass box (12) and an exhaust channel (22) for discharging the air drawn from the grass box (12), with the exhaust channel (22) being associated with a compressor disk (23) for generating a negative pressure in the grass box (12), which compressor disk (23) is concentric to the cutting disk (21) and is jointly held with the same, with the compressor disk (23) being enclosed jointly with the cutting disk (21) by a mowing space into which both the intake channel (24) and the exhaust channel (22) open, **characterized in that** the air flowing through the exhaust channel (22) meets the compressor disk (23) and, in this region of the compressor disk (23) facing the intake channel (24), can enter directly into the same, and is guided out of the mowing space at least in the region of the compressor disk (23) disposed in the direction of the grass box (12), with the intake channel (24) opening into the mowing space before the compressor disk (23) in the intended direction of travel.

2. A lawnmower according to claim 1, **characterized in that** the cutting disk (21) and the compressor disk (23) are driven by a common drive (26) and a transmission is provided preferably between cutting disk (21) and drive (26) and/or between compressor disk (23) and drive (26).

3. A lawnmower according to one of the preceding claims, **characterized in that** the compressor disk (23) comprises a plurality of lamellae which each extend from a boundary region of the compressor disk towards its center in a vortex-like fashion.

4. A lawnmower according to claim 3, **characterized in that** the compressor disk (23) is bent upwardly in a plate-shaped manner in its boundary region in the direction of the lamellae, with the boundary region, and preferably also a central region, being at least partly overlapped by the intake channel (24).

5. A lawnmower according to claim 4, **characterized in that** the boundary region is overlapped at least partly by a baffle plate (15) which encompasses the boundary region in an arc-shaped manner by leaving exposed an air gap.

6. A lawnmower according to one of the preceding claims, **characterized in that** the housing (10) is elevated on three wheels (30, 31, 31'), with a central steering wheel (30) being provided which is arranged concentrically in relation to the cutting disk (21) and is held independent of the bearing of the cutting disk (21).

7. A lawnmower according to claim 8, **characterized in that** the cutting disk (21) comprises at least one blade insert with a plurality of blades (20) and a central recess through which the running wheel (30) penetrates the plane of the cutting disk (21).

8. A lawnmower according to claim 9, **characterized in that** the cutting disk (21) and/or the blade inserts are exchangeable, with different blade inserts being usable, optionally with different numbers of blades and arranged in several planes.

9. A lawnmower according to one of the preceding claims, **characterized in that** the cutting height is variable by at least the front axle or the steering wheel (30), but preferably all wheel suspensions similarly, being held by means of a lifting cylinder which is connected with the housing (10) via a swiveling fork (35), with the height being adjustable by lifting or lowering a free swiveling arm of the swiveling fork (35), preferably manually by means of an adjusting screw (36), or electrically from a guide bar of the lawnmower.

10. A lawnmower according to one of the claims 1 to 8,
**characterized in that** the cutting height is variable by the cutting disk (21) being held in a height-displaceable manner in relation to the steering wheel (30) by means of a swiveling fork (35), with the height being adjustable by lifting or lowering a free swiveling arm of the swiveling fork (35), preferably manually by means of an adjusting screw (36), or electrically from a guide bar of the lawnmower.

11. A lawnmower according to one of the preceding claims,
**characterized in that** the grass box (12) is associated with a mulch module (40) in such an integral or removable manner that while entering the grass box (12), the mown material is passed to the mulch module, and from there via an outlet opening associated with the mulch module (40) and facing as intended in the direction of the lawn surface can be introduced into the surface of the lawn again, with preferably the mulch module (40) being integrated in the air circuit in such a way that the entrainment of the mulch from the mulch module (40) occurs with the help of the discharge air drawn in by the compressor disk (23).

12. A lawnmower according to a claim 11, **characterized in that** the mulch module (40) is associated with at least one fertilizer tank (45) which can be introduced into the mulch via an outlet opening, preferably a Venturi nozzle (46), with preferably the existing suction effect being utilized for introducing the fertilizer.

13. A lawnmower according to one of the claims 11 or 12,
**characterized in that** the mulch module (40) is associated with at least one cutting tool (41) for chopping the drawn mown material, preferably a chaff cutting mechanism, a blade arrangement or a line trimmer arrangement, which is driven by a motor (42) supplied by a battery (43) which is independent of the lawnmower.

14. A lawnmower according to one of the preceding claims,
**characterized in that** a cooling of the drive (26) occurs by means of an airflow, with said airflow joining the airflow generated by the compressor disk (23), with the drive (26) preferably being associated with a separate feed air inlet which is connected on the discharge-air side at least indirectly with the grass box (12).

15. A lawnmower according to one of the preceding claims,
**characterized in that** the housing (10) forms a mowing space (11) in the region of the compressor disk (23), with the mowing space (11) having a widened portion (14) which opens into the intake channel (24).

## Revendications

1. Tondeuse à gazon avec une carcasse (10), comprenant un bac collecteur (12) pour recueillir les tontes coupées au moyen d'un disque de coupe rotatif (21), un canal d'aspiration (24) pour aspirer les tontes dans le bac collecteur (12) et un canal d'extraction (22) pour évacuer l'air aspiré hors du bac collecteur (12), dans laquelle le canal d'extraction (22) est associé à un disque de compactage (23) supporté avec le disque de coupe (21) de façon concentrique de celui-ci pour produire une dépression dans le bac collecteur (12), le disque de compactage (23) étant entouré avec le disque de coupe (21) par un espace de tonte dans lequel débouchent aussi bien le canal d'aspiration (24) que le canal d'extraction (22), **caractérisée en ce que** l'air circulant par le canal d'extraction (22) croise le disque de compactage (23) et à partir de celui-ci, peut entrer directement dans la partie du disque de compactage (23) dirigée vers le canal d'aspiration (24) et est évacuée hors de l'espace de tonte au moins dans la zone du disque de compactage (23) située dans la direction du bac collecteur (12), le canal d'aspiration (24) débouchant dans l'espace de tonte devant le disque de compactage (23) dans le sens de la marche prévu.

2. Tondeuse à gazon selon la revendication 1, **caractérisée en ce que** le disque de coupe (21) et le disque de compactage (23) sont entraînés par un entraînement commun (26) et une multiplication est prévue de préférence entre le disque de coupe (21) et l'entraînement (26) et/ou entre le disque de compactage (23) et l'entraînement (26).

3. Tondeuse à gazon selon l'une des revendications précédentes, **caractérisée en ce que** le disque de compactage (23) présente une pluralité de lamelles qui partent chacune d'une zone de bord du disque de compactage (23) vers son centre en forme de tourbillon.

4. Tondeuse à gazon selon la revendication 3, **caractérisée en ce que** le disque de compactage (23) est recourbé en forme d'assiette dans sa zone de bord en direction des lamelles, la zone de bord, et de préférence aussi une zone centrale, étant au moins en partie entourées par le canal d'aspiration (24).

5. Tondeuse à gazon selon la revendication 4, **caractérisée en ce que** la zone de bord est au moins partiellement entourée d'une tôle de déflecteur (15) qui entoure la zone de bord en arc de cercle en laissant un entrefer libre.

6. Tondeuse à gazon selon l'une des revendications précédentes, **caractérisée en ce que** la carcasse (10) est élevée sur trois roues (30, 31, 31'), une roue directrice centrale étant prévue (30) qui est disposée de façon concentrique du disque de coupe (21) et supportée indépendamment du support du disque de coupe (21).

7. Tondeuse à gazon selon la revendication 8, **caractérisée en ce que** le disque de coupe (21) présente au moins un insert de couteaux avec une pluralité de couteaux (20) et un évidement central à travers lequel la roue de roulement (30) traverse le plan du disque de coupe (21).

8. Tondeuse à gazon selon la revendication 9, **caractérisée en ce que** le disque de coupe (21) et/ou les inserts de couteaux sont interchangeables, différents inserts de couteaux, avec éventuellement un nombre de couteaux différent et disposés à plusieurs niveaux, pouvant être insérés.

9. Tondeuse à gazon selon l'une des revendications précédentes, **caractérisée en ce que** la hauteur de coupe peut être modifiée par le fait qu'au moins l'essieu avant ou respectivement la roue directrice (30), mais de préférence toutes les suspensions de roue, sont supportés au moyen d'un vérin de levage qui est relié à la carcasse (10) par une fourche pivotante (35), un réglage en hauteur pouvant être réalisé en levant ou baissant un bras pivotant libre de la fourche pivotante (35), de préférence à la main au moyen d'une vis de réglage (36) ou électriquement à partir d'une poignée de direction de la tondeuse à gazon.

10. Tondeuse à gazon selon l'une des revendications 1 à 8, **caractérisée en ce que** la hauteur de coupe peut être modifiée par le fait que le disque de coupe (21) est supporté de façon à pouvoir être déplacé en hauteur par rapport à la roue directrice (30) au moyen d'une fourche pivotante (35), un réglage en hauteur pouvant être réalisé en levant ou baissant un bras pivotant libre de la fourche pivotante (35), de préférence à la main au moyen d'une vis de réglage (36) ou électriquement à partir d'une poignée de direction de la tondeuse à gazon.

11. Tondeuse à gazon selon l'une des revendications précédentes, **caractérisée en ce que** le bac collecteur (12) est associé à un module de mulching (40) de telle façon fixe ou amovible que les tontes entrant dans le bac collecteur (12) soient amenées dans le module de mulching (40) et, à partir de celui-ci, puissent être renvoyées dans la surface de la pelouse en passant par une ouverture de sortie associée au module de mulching (40) et orientée de façon prévue en direction de la surface de la pelouse, le module de mulching (40) étant de préférence intégré dans le circuit d'air de telle façon que le mulch soit entraîné hors du module de mulching (40) à l'aide de l'air sortant aspiré par le disque de compactage (23).

12. Tondeuse à gazon selon la revendication 11, **caractérisée en ce que** le module de mulching (40) est associé à au moins un réservoir de fertilisant (45) qui peut être introduit dans le mulch par une ouverture de sortie, de préférence un venturi (46), l'effet d'aspiration existant étant de préférence utilisé pour introduire le fertilisant.

13. Tondeuse à gazon selon l'une des revendications 11 ou 12, **caractérisée en ce que** le module de mulching (40) est associé à au moins un outil de coupe (41) pour le hachage des coupes aspirées, de préférence une hacheuse, une disposition de couteaux ou une disposition de fils de coupe, qui est entraîné au moyen d'un moteur (42) alimenté par une batterie (43) indépendante de la tondeuse à gazon.

14. Tondeuse à gazon selon l'une des revendications précédentes, **caractérisée en ce qu'**un refroidissement de l'entraînement (26) est réalisé au moyen d'un courant d'air, lequel courant d'air se réunit avec le courant d'air produit par le disque de compactage (23), un raccord d'entrée d'air séparé étant de préférence associé à l'entraînement (26) et étant relié au moins indirectement au bac collecteur (12) du côté de la sortie d'air.

15. Tondeuse à gazon selon l'une des revendications précédentes, **caractérisée en ce que** la carcasse (10) forme un espace de tonte (11) dans la zone du disque de compactage (23), lequel espace de tonte (11) présente un évasement (14) qui débouche dans le canal d'aspiration (24).
